(19) Europäisches Patentamt / European Patent Office / Office européen des brevets

(11) **EP 3 297 335 A1**

(12) **EUROPEAN PATENT APPLICATION**
published in accordance with Art. 153(4) EPC

(43) Date of publication:
**21.03.2018 Bulletin 2018/12**

(21) Application number: **16792218.6**

(22) Date of filing: **13.05.2016**

(51) Int Cl.:
*H04W 48/16* (2009.01)

(86) International application number:
**PCT/CN2016/082091**

(87) International publication number:
**WO 2016/180368 (17.11.2016 Gazette 2016/46)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **14.05.2015 CN 201510246239**

(71) Applicant: **NTT DOCOMO, INC.**
**Tokyo (JP)**

(72) Inventors:
• **LIU, Liu**
  **Beijing 100190 (CN)**
• **MU, Qin**
  **Beijing 100190 (CN)**
• **JIANG, Huiling**
  **Beijing 100190 (CN)**

(74) Representative: **Hoffmann Eitle**
**Patent- und Rechtsanwälte PartmbB**
**Arabellastraße 30**
**81925 München (DE)**

(54) **ACCESS METHOD AND ACCESS DEVICE**

(57) Provided is an access method, which is applied to a user equipment. The access method comprises: acquiring an initial receiving target power of a base station to be accessed by the user equipment; setting candidate retransmission levels of an initial access signal of the user equipment based on the initial receiving target power; selecting a retransmission level for the user equipment from the candidate retransmission levels; and retransmitting the initial access signal to the base station according to the selected retransmission level to access a network. The technical solution of accessing in the embodiments of this disclosure enables a user equipment to retransmit an initial access signal using an appropriate retransmission solution, thereby increasing the spectrum utilization effciency and saving the transmission power of the user equipment.

200

| |
|---|
| Acquiring an initial receiving target power of a base station to be accessed by the user equipment — S210 |
| Setting candidate retransmission levels of an initial access signal of the user equipment based on the initial receiving target power — S220 |
| Selecting a retransmission level for the user equipment from the candidate retransmission levels — S230 |
| Retransmitting the initial access signal to the base station according to the selected retransmission level to access a network — S240 |

Fig.2

**Description**

TECHNICAL FIELD

The present disclosure relates to the technical field of communications, and in particular to an access method and an access device for a user terminal.

BACKGROUND

With the rapid development of communication technologies, communication systems which can support various technologies at the same time or partially comprise, but are not limited to, the global system for communications (GSM), long term evolution (LTE), wideband code division multiple access (WCDMA), time division synchronous code division multiple access (TD-SCDMA), code division multiple access (CDMA), etc. By utilizing these communication systems, various user terminals may perform voice or data communication. The user terminals may be a mobile phone, a tablet computer, etc. In addition, the development of the Internet of Things enables a gradually increasing demand for machine-type communications. Accordingly, user equipments such as a home appliance, a medical equipment, a monitoring device, a smart electric meter also need to perform data transmission via various communication systems. Therefore, there is a large number of user equipments to be accessed to base stations of a communication system.

Taking a user equipment of machine-type communications accessing an LTE network as an example, the user equipment receives broadcast information from a base station, and then transmits an initial access signal such as preamble to the base station via e.g. a physical random access channel, and the base station interacts with the user equipment in response to the initial access signal, and allocates a wireless resource to the user equipment, so that the user equipment accesses the base station for communication. Since the maximum transmission power of the user equipment is limited, when the user equipment is relatively far from the base station or a channel environment is relatively poor, even if the user equipment transmits the initial access signal at the maximum transmission power, the base station may also be unable to recognize the initial access signal.

One solution is that the user equipment retransmits the initial access signal for a pre-determined number of times, and the base station performs comprehensive processing on the initial access signal received for multiple times, so that the initial access signal may possibly be accurately recognized. The retransmission of the initial access signal is equivalent to increasing the transmission power of the user equipment. That is to say, the retransmission of the initial access signal generates an equivalent transmission power greater than the actual transmission power of the user equipment. In this case, setting the number of retransmissions becomes a technical problem to be solved urgently. If the number of retransmissions is set too high, then a spectrum utilization efficiency of the access signal may be reduced, and the transmission power of the user equipment is wasted. If the number of retransmissions is set too low, then the base station may be unable to be accessed. Therefore, a retransmission solution to reasonably set the initial access signal is expected, which increases the spectrum utilization efficiency and saves the transmission power of the user equipment at the same time of ensuring successful access.

SUMMARY

The embodiments of the present disclosure provide an access method and an access device for a user equipment, which enables a user equipment to retransmit an initial access signal with an appropriate retransmission solution, thereby increasing a spectrum utilization efficiency and saving the transmission power of the user equipment.

In a first aspect, an embodiment of the present disclosure discloses an access method, applied to a user equipment, and the access method may comprise: acquiring an initial receiving target power of a base station to be accessed by the user equipment; setting candidate retransmission levels of an initial access signal of the user equipment based on the initial receiving target power; selecting a retransmission level for the user equipment from the candidate retransmission levels; and retransmitting the initial access signal to the base station according to the selected retransmission level to access a network.

In combination with the first aspect, in one implementation of the first aspect, the setting candidate retransmission levels of an initial access signal of the user equipment based on the initial receiving target power may comprise: determining a maximum equivalent transmission power of the user equipment based on the initial receiving target power; and setting candidate retransmission levels of the user equipment based on the maximum equivalent transmission power.

In combination with the first aspect and the above implementation thereof, in another implementation of the first aspect, the setting a maximum equivalent transmission power of the user equipment based on the initial receiving target power may comprise: acquiring a minimum coupling loss between the user equipment and the base station, and a receiving sensitivity of the base station; and setting a maximum equivalent transmission power of the user equipment based on the initial receiving target power, the minimum coupling loss and the receiving sensitivity of the base station.

In combination with the first aspect and the above implementation thereof, in another implementation of the first aspect, the setting a maximum equivalent transmission power of the user equipment based on the initial receiving target power, the minimum coupling loss and the receiving sensitivity of the base station may comprise: determining a greater one of the initial receiving target power and the receiving sensitivity of the base station; and setting a maximum equivalent transmission power of the user equipment based on the greater one and the minimum coupling loss.

In combination with the first aspect and the above implementation thereof, in another implementation of the first aspect, the setting a maximum equivalent transmission power of the user equipment based on the initial receiving target power may further comprise acquiring a path loss between the user equipment and the base station; and the setting a maximum equivalent transmission power of the user equipment based on the initial receiving target power, the minimum coupling loss and the receiving sensitivity of the base station may comprise: determining a greater one of the sum of the initial receiving target power and the path loss, and the sum of the receiving sensitivity and the minimum coupling loss; and determining the maximum equivalent transmission power based on the greater one.

In combination with the first aspect and the above implementation thereof, in another implementation of the first aspect, the setting candidate retransmission levels of the user equipment based on the maximum equivalent transmission power may comprise: setting an equivalent transmission power of each candidate retransmission level based on the maximum equivalent transmission power and a maximum actual transmission power of the user equipment; and setting the number of retransmissions of each candidate level based on the equivalent transmission power of each candidate retransmission level.

In combination with the first aspect and the above implementation thereof, in another implementation of the first aspect, the setting an equivalent transmission power of each candidate retransmission level based on the maximum equivalent transmission power and a maximum actual transmission power of the user equipment may comprise: equally dividing a range from the maximum actual transmission power to the maximum equivalent transmission power into intervals corresponding to the number of candidate retransmission levels; and setting a transmission power numerical value greater than an upper limit of each interval as an equivalent transmission power of each candidate retransmission level.

In combination with the first aspect and the above implementation thereof, in another implementation of the first aspect, the setting the number of retransmissions of each candidate level based on the equivalent transmission power of each candidate retransmission level comprises setting the number of retransmissions of each candidate retransmission level according to the following formula:

$$Nx = \text{round}(10^{(P_{eNx} - P_{cmax,c})/10})$$

wherein $P_{eNx}$ is an equivalent transmission power of an xth candidate retransmission level, $P_{cmax,c}$ is a maximum actual transmission power of the user equipment, round() is a round up function, and Nx is the number of retransmissions of the xth candidate retransmission level.

In combination with the first aspect and the above implementation thereof, in another implementation of the first aspect, the selecting a retransmission level for the user equipment from the candidate retransmission levels may comprise: acquiring a target equivalent transmission power required by the user equipment to access the base station; and selecting a retransmission level for the user equipment according to the target equivalent transmission power.

In combination with the first aspect and the above implementation thereof, in another implementation of the first aspect, the selecting a retransmission level for the user equipment according to the target equivalent transmission power may comprise: determining available retransmission levels of which an equivalent transmission power is greater than the target equivalent transmission power among candidate retransmission levels; and selecting an available retransmission level with the minimum number of retransmissions from the available retransmission levels as a retransmission level of the user equipment.

In combination with the first aspect and the above implementation thereof, in another implementation of the first aspect, the retransmit the initial access signal to the base station according to the selected retransmission level may comprise: determining an actual transmission power of the user equipment based on the number of retransmissions corresponding to the selected retransmission level; and repeatedly transmitting the initial access signal for the number of retransmissions corresponding to the selected retransmission level at the actual transmission power.

In combination with the first aspect and the above implementation thereof, in another implementation of the first aspect, the determining an actual transmission power of the user equipment based on the number of retransmissions corresponding to the selected retransmission level may comprise: acquiring at least one of a target equivalent transmission power required by the user equipment to access the base station and a maximum actual transmission power of the user equipment; and determining an actual transmission power of the user equipment based on at least one of the target equivalent transmission power and the maximum actual transmission power.

In combination with the first aspect and the above implementation thereof, in another implementation of the first aspect, the retransmitting the initial access signal to the base station according to the selected retransmission level may further comprise: increasing the actual transmission power in the case where the user equipment does not access the base station; repeatedly transmitting the initial access signal for the number of retransmissions corresponding to the selected retransmission level at an increased actual transmission power, until the base station is accessed or the increased actual transmission power reaches the maximum actual transmission power of the user equipment; increasing the retransmission level of the user equipment in the case where the actual transmission power reaches the maximum actual transmission power and the base station is not accessed; and retransmitting the initial access signal to the base station according to an increased retransmission level.

In a second aspect, an embodiment of the present disclosure provides an access device, applied to a user equipment, and the access device may comprise: an acquisition unit, configured to acquire an initial receiving target power of a base station to be accessed by the user equipment; a level setting unit, configured to set candidate retransmission levels of an initial access signal of the user equipment based on the initial receiving target power; a selection unit, configured to select a retransmission level for the user equipment from the candidate retransmission levels; and a transmitting unit, configured to retransmit the initial access signal to the base station according to the selected retransmission level to access a network.

In combination with the second aspect, in one implementation of the second aspect, the level setting unit may comprise: a power range determination module, configured to determine a maximum equivalent transmission power of the user equipment based on the initial receiving target power; and a retransmission level setting module, configured to set candidate retransmission levels of the user equipment based on the maximum equivalent transmission power.

In combination with the second aspect and the above implementation thereof, in another implementation of the second aspect, the acquisition unit may acquire a minimum coupling loss between the user equipment and the base station, and a receiving sensitivity of the base station; and the power range determination module may set a maximum equivalent transmission power of the user equipment based on the initial receiving target power, the minimum coupling loss and the receiving sensitivity of the base station.

In combination with the second aspect and the above implementation thereof, in another implementation of the second aspect, the power range determination module may set a maximum equivalent transmission power of the user equipment by the following operations: determining a greater one of the initial receiving target power and the receiving sensitivity of the base station; and setting a maximum equivalent transmission power of the user equipment based on the greater one and the minimum coupling loss.

In combination with the second aspect and the above implementation thereof, in another implementation of the second aspect, the acquisition unit may further acquire a path loss between the user equipment and the base station, and the power range determination module may determine a greater one of the sum of the initial receiving target power and the path loss, and the sum of the receiving sensitivity and the minimum coupling loss, and determine the maximum equivalent transmission power based on the greater one.

In combination with the second aspect and the above implementation thereof, in another implementation of the second aspect, the retransmission level setting module may comprise: a first sub-setting module, configured to set an equivalent transmission power of each candidate retransmission level based on the maximum equivalent transmission power and a maximum actual transmission power of the user equipment; and a second sub-setting module, configured to set the number of retransmissions of each candidate level based on the equivalent transmission power of each candidate retransmission level.

In combination with the second aspect and the above implementation thereof, in another implementation of the second aspect, the first sub-setting module may equally divide a range from the maximum actual transmission power to the maximum equivalent transmission power into intervals corresponding to the number of candidate retransmission levels, and set a transmission power numerical value greater than an upper limit of each interval as an equivalent transmission power of each candidate retransmission level.

In combination with the second aspect and the above implementation thereof, in another implementation of the second aspect, the second sub-setting module may set the number of retransmissions of each candidate retransmission level according to the following formula: $N_x = \text{round}(10^{(P_{eNx}-P_{cmax,c})/10})$, wherein $P_{eNx}$ is an equivalent transmission power of an xth candidate retransmission level, $P_{cmax,c}$ is a maximum actual transmission power of the user equipment, round() is a round up function, and $N_x$ is the number of retransmissions of the xth candidate retransmission level.

In combination with the second aspect and the above implementation thereof, in another implementation of the second aspect, the acquisition unit may acquire a target equivalent transmission power required by the user equipment to access the base station; and the selection unit may select a retransmission level for the user equipment according to the target equivalent transmission power.

In combination with the second aspect and the above implementation thereof, in another implementation of the second aspect, the selection unit may determine available retransmission levels of which an equivalent transmission power is greater than the target equivalent transmission power among candidate retransmission levels, and select an available retransmission level with the minimum number of retransmissions from the available retransmission levels as a retransmission level of the user equipment.

In combination with the second aspect and the above implementation thereof, in another implementation of the second aspect, the transmitting unit may comprise: a parameter determination module, configured to determine an actual transmission power of the user equipment based on the number of retransmissions corresponding to the selected retransmission level; and a transmitting module, configured to repeatedly transmit the initial access signal for the number of retransmissions corresponding to the selected retransmission level at the actual transmission power.

In combination with the second aspect and the above implementation thereof, in another implementation of the second aspect, the acquisition unit may further acquire at least one of a target equivalent transmission power required by the user equipment to access the base station and a maximum actual transmission power of the user equipment; and the parameter determination module may determine an actual transmission power of the user equipment based on at least one of the target equivalent transmission power and the maximum actual transmission power and the number of retransmissions.

In combination with the second aspect and the above implementation thereof, in another implementation of the second aspect, the parameter determination module may increase the actual transmission power in the case where the user equipment does not access the base station, and increase the retransmission level of the user equipment in the case where the actual transmission power increases to the maximum actual transmission power and the base station is not accessed; and the transmitting module may repeatedly transmit the initial access signal according to the increased actual transmission power or the number of retransmissions corresponding to an increased retransmission level to access the base station.

In a third aspect, an embodiment of the present disclosure provides a user equipment, which may comprise the access device as described above.

In the technical solutions of the access method and access device according to the embodiments of the present disclosure, each candidate retransmission level of an initial access signal of a user equipment is set based on an initial receiving target power of a base station, and a retransmission level for the user equipment is selected from the candidate retransmission levels, which enables the user equipment to retransmit an initial access signal with an appropriate retransmission solution, so as to increase a spectrum utilization efficiency and save the transmission power of the user equipment.

BRIEF DESCRIPTION OF THE DRAWINGS

To describe the technical solutions in the embodiments of the present disclosure more clearly, the following briefly introduces the accompanying drawings required for describing the embodiments or the prior art. Apparently, the accompanying drawings in the following description show merely some embodiments of the present disclosure, and a person of ordinary skill in the art may still derive other drawings from these accompanying drawings without creative efforts.

Fig. 1 is a schematic diagram which illustratively shows an application scenario according to an embodiment of the present disclosure.

Fig. 2 is a flowchart which illustratively shows an access method according to an embodiment of the present disclosure.

Fig. 3 is a flowchart which illustratively shows setting candidate retransmission levels of an initial access signal in the access method of Fig. 2.

Fig. 4 is a flowchart which illustratively shows a first example of setting a maximum equivalent transmission power of a user equipment in setting candidate retransmission levels in Fig. 3.

Fig. 5 is an implementation example which illustratively shows setting a maximum equivalent transmission power of Fig. 4.

Fig. 6 is a flowchart which illustratively shows a second example of setting a maximum equivalent transmission power of a user equipment in setting candidate retransmission levels in Fig. 3.

Fig. 7 is an implementation example which illustratively shows setting a maximum equivalent transmission power of Fig. 6.

Fig. 8 is a flowchart which illustratively shows setting candidate retransmission levels according to a maximum equivalent transmission power of Fig. 3.

Fig. 9 is an implementation example which illustratively shows setting candidate retransmission levels according to a maximum equivalent transmission power of Fig. 8.

Fig. 10 is a flowchart which illustratively shows selecting a retransmission level of a user equipment from candidate retransmission levels in the access method of Fig. 2.

Fig. 11 is an implementation example which illustratively shows selecting a retransmission level of a user equipment of Fig. 10.

Fig. 12 is a flowchart which illustratively shows retransmission of the initial access signal to the base station in the access method of Fig. 2.

Fig. 13(a) illustratively shows a first operation example of a base station according to an embodiment of the present disclosure.

Fig. 13(b) illustratively shows a second operation example of a base station according to an embodiment of the present disclosure.

Fig. 14 is a block diagram which illustratively shows an access device according to an embodiment of the present disclosure.

Fig. 15 is a block diagram which illustratively shows a level setting unit in the access device of Fig. 14.

Fig. 16 is a block diagram which illustratively shows a transmitting unit in the access device of Fig. 14.

Fig. 17 is a block diagram which illustratively shows another access device according to an embodiment of the present disclosure.

DETAILED DESCRIPTION OF THE EMBODIMENTS

The technical solutions in the embodiments of the present invention will be clearly and completely described as follows with reference to the drawings in the embodiments of the present invention. Apparently, the described embodiments are a part of embodiments of the present invention rather than all the embodiments.

The technical solutions of the embodiments of the present invention may be applied to various communications systems, for example: a code division multiple access (CDMA) system, wideband code division multiple access (WCDMA), a long term evolution (LTE) system and LTE-Advanced thereof, time division long term evolution (TD-LTE) and other wideband communication systems, etc. A user equipment (UE) of a communication system may communicate with one or more core networks via a radio access network (e.g. RAN), and the user equipment may be a mobile terminal, such as a mobile phone (or referred to as a "cellular" phone) and a computer having a mobile terminal, for example, it can be a portable, pocket-size, handheld, computer built-in or vehicle-mounted mobile device, and exchanges language and/or data with the radio access network.

A base station may be a base transceiver station (BTS) in CDMA, and may also be a NodeB in WCDMA, and also may be an eNB or e-NodeB (evolutional Node B) in LATE or LTE-Advanced, a home e-NodeB (HeNB), and a relay node (RN) in LTE-Advanced, and the present invention does not limit thereto.

For the convenience of description, the following description will be made taking a long term evolution communication system, and a base station (eNB) of the system and a user equipment (UE) as an example. In machine-type communications, the user equipment (UE) is a terminal of machine-type communications.

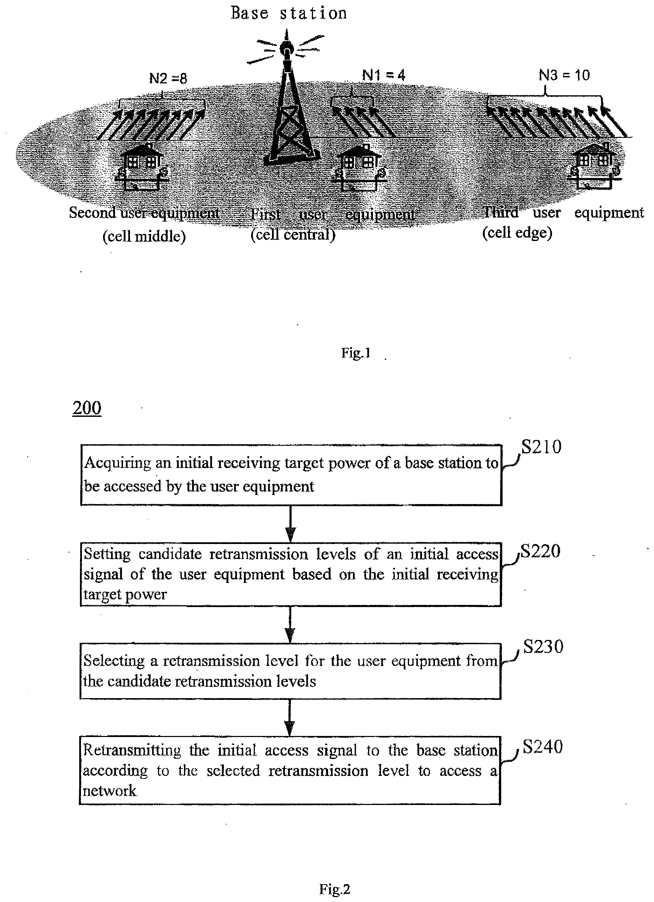

Fig. 1 is a schematic diagram which illustratively shows an application scenario according to an embodiment of the present disclosure. As shown in Fig. 1, a base station in a communication system covers an oval cell, and three user equipments are located in different positions of the cell. Each user equipment is located at a different distance from the base station, and may have a different channel environment with the base station. When each user equipment enters the cell, broadcast information from the base station may be received. The user equipment learns basic conditions of the base station based on the broadcast information, and transmits an initial access signal to the base station to request access to the base station. The base station interacts with the user equipment in response to the initial access signal, and allocates a wireless resource to the user equipment, so that the user equipment accesses the base station for communication.

A first user equipment is located at the centre of the cell and close to the base station, so that a relatively small number of retransmissions is required, which may, for example, send the initial access signal twice. The base station performs comprehensive processing on the two initial access signals received from the first user equipment to execute an access operation. A second user equipment is located at the middle of the cell and is farther from the base station compared to the first user equipment, so that a relatively greater number of retransmissions is required, which may, for example, send the initial access signal for eight times. The base station performs comprehensive processing on the eight initial access signals received from the second user equipment to execute an access operation. A third user equipment is located at the edge of the cell and is further away from the base station compared to the second user equipment, so that a even greater number of retransmissions is required, which may, for example, send the initial access signal for ten times. The base station performs comprehensive processing on the ten initial access signals received from the third user equipment to execute an access operation.

In the embodiments of the present disclosure, each candidate retransmission level of an initial access signal of a user equipment is set based on an initial receiving target power of a base station, and a retransmission level for the user equipment is selected from the candidate retransmission levels. The initial receiving target power is a power value required for accessing the base station and the initial access signal of the user equipment to arrive at the base station. The initial receiving target power is generally set by the base station. The initial receiving target power of each base station may be different, for example, an initial receiving target power of an evolutional Node B (eNB) is typically within the range from -90 dBm to -120 dBm. The initial receiving target power of the same base station in different environments may also be the same. In an embodiment of the present disclosure, the user equipment is able to variably set different candidate retransmission levels of the initial access signal of the user equipment according to the initial receiving target power of the base station, and for example, select a retransmission level suitable for the user equipment according to the position thereof in the cell, etc. Therefore, the user equipment is able to retransmit an initial access signal with an appropriate retransmission solution, so as to increase a spectrum utilization efficiency and save the transmission power of the user equipment.

Fig. 2 is a flowchart which illustratively shows an access method 200 according to an embodiment of the present disclosure. The access method 200 is applied to each user equipment shown in Fig. 1.

As shown in Fig. 2, the access method 200 may comprise: acquiring an initial receiving target power of a base station to be accessed by the user equipment (S210); setting candidate retransmission levels of an initial access signal of the user equipment based on the initial receiving target power (S220); selecting a retransmission level for the user equipment from the candidate retransmission levels (S230); and retransmitting the initial access signal to the base station according to the selected retransmission level to access the network (S240).

In S210, the user equipment, for example, may acquire the initial receiving target power of the base station according to a broadcast signal of the base station to be accessed. As described previously, the initial receiving target power is a power value required for accessing the base station and the initial access signal of the user equipment to arrive at the base station. The initial receiving target power is generally set by the base station. The initial receiving target power of each base station may be different, and the initial receiving target power of the same base station in different environments may also be the same.

In addition to comprising the initial receiving target power of the base station, the broadcast signal may comprise other information, such as a receiver sensitivity of the base station, a minimum coupling loss (MCL) between the base station and the user equipment, etc. The minimum coupling loss typically comprises a free space loss from the user equipment to an antenna of the base station, and an antenna feedback system loss between the antenna of the base station and a receiver thereof.

In addition to acquiring the initial receiving target power from the base station, the user equipment may also acquire the initial receiving target power from a particular memory. For example, one server may be utilized to maintain initial receiving target powers of a plurality of base stations in real time, and provide those to the user equipment when the user equipment requires them. The method of acquiring the initial receiving target power of the base station used in S210 does not limit the embodiments of the present disclosure.

In S220, a plurality of candidate retransmission levels of the initial access signal of the user equipment are set for the user equipment based on the initial receiving target power. Typically, the number of the candidate retransmission levels may be 2, 3, 4, 5, etc., which may be appropriately set according to the range of the cell and the diversity of communication environments in the cell. For example, when the range of the cell is relatively large, more candidate retransmission levels may be set; when the range of the cell is relatively small, fewer candidate retransmission levels may be set; when the communication environments in the cell are relatively complicated, more candidate retransmission levels may be set; and when the communication environments in the cell are relatively simple, fewer candidate retransmission levels may be set. In the embodiments of the present disclosure, three candidate retransmission levels are taken as an example for description.

In each candidate retransmission level, there may be different numbers of retransmissions and different equivalent retransmission powers. For example, in an xth candidate retransmission level, the number of retransmissions is Nx, and the equivalent transmission power is $P_{eNx}$, where x = 1, 2, or 3. When there are more candidate retransmission levels, the value range of x increases accordingly. In each retransmission level, transmission may be performed fixedly at an actual transmission power corresponding to an equivalent transmission power thereof, or the actual transmission power may be changed, which will be described in detail below.

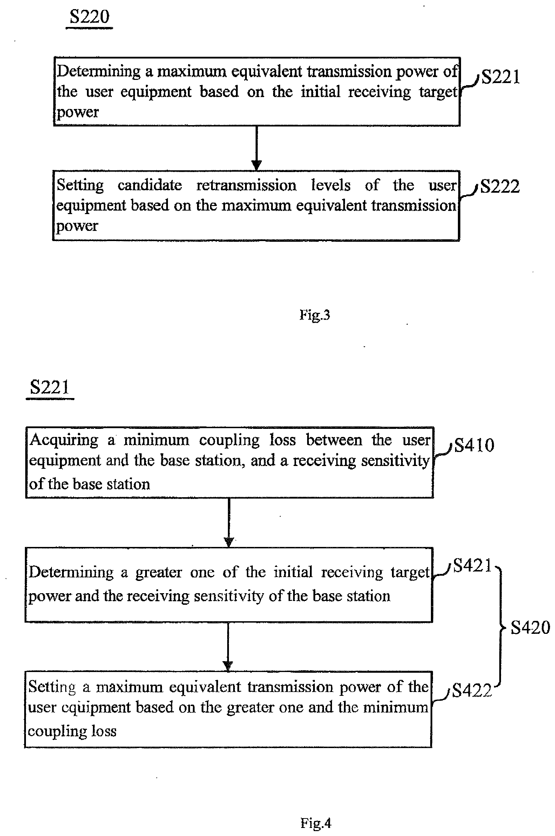

Fig. 3 is a flowchart which illustratively shows setting candidate retransmission levels of an initial access signal in the access method of Fig. 2. As shown in Fig. 3, setting the candidate retransmission levels of the initial access signal S220 may comprise: determining a maximum equivalent transmission power of the user equipment based on the initial receiving target power (S221); and setting candidate retransmission levels of the user equipment based on the maximum equivalent transmission power (S222).

The maximum equivalent transmission power Pm determined in S221 enables the user equipment to access the base station at any position of the base station, that is, the initial access signal sent by the user equipment at any position of the cell by utilizing the maximum equivalent transmission power is able to be recognized by the base station. As an example, the maximum equivalent transmission power may be the sum of the initial receiving target power and a maximum path loss in the cell of the base station. The maximum path loss, for example, is a path loss in the cell from the farthest position from the base station to the base station. In the case where there is an obstacle in the cell, the maximum path loss may be a path loss from a position with the greatest influence by the obstacle to the base station. In addition, the maximum equivalent transmission power of the user equipment may also be determined based on the initial receiving target power and other parameters, which will be described in conjunction with Figs. 4-7.

In S222, the candidate retransmission levels of the user equipment may be set as follows: setting a maximum number of retransmissions of the user equipment based on the maximum equivalent transmission power; setting the number of retransmissions for each candidate retransmission level based on the number division of candidate retransmission levels and the maximum number of retransmissions; and calculating each equivalent transmission power corresponding to each number of retransmissions.

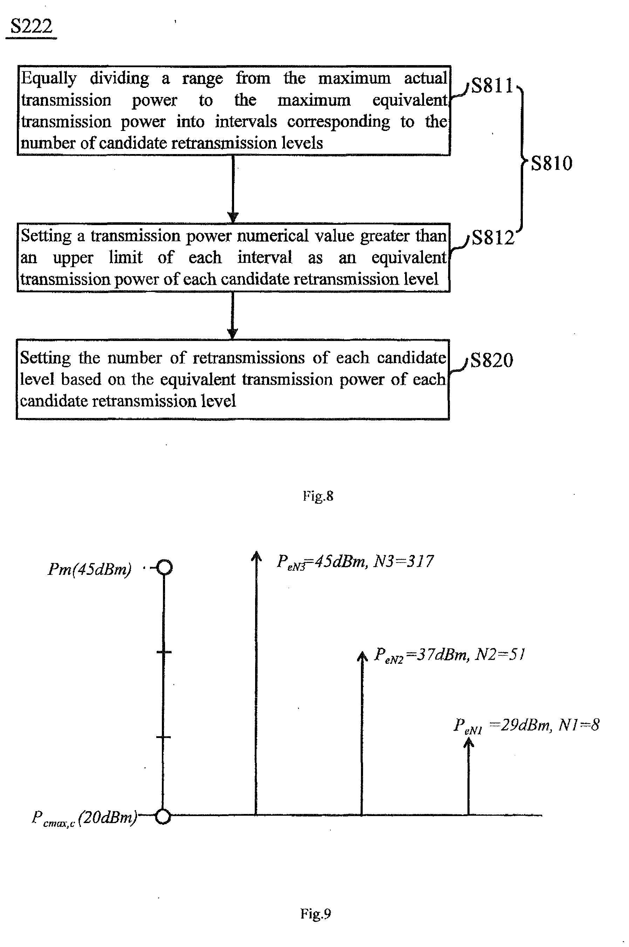

Alternatively, in S222, an equivalent transmission power of each candidate retransmission level may also be set firstly based on the maximum equivalent transmission power, and the number of retransmissions of each candidate level is set based on the equivalent transmission power of each candidate retransmission level. This will be further described in detail in conjunction with Figs. 8 and 9 below.

In S220 described above, the candidate retransmission levels are set for the user equipment, and in S230, the user equipment selects a retransmission level for the user equipment from the candidate retransmission levels according to the requirements thereof. The selected retransmission level, for example, depends on the position of the user equipment in the cell, the path loss from the user equipment to the base station, etc.

As an example, each set candidate retransmissions level may roughly correspond to a different region in the cell, and then a retransmission level thereof is selected according to the position of the user equipment in the cell. As another example, the user equipment may receive a reference signal transmitted by the base station, and calculates a reference signal receiving power (RSRP) according to the reference signal, or calculate the path loss between the user equipment and the base station according to the reference signal. Then, a retransmission level for the user equipment is selected from the candidate retransmission levels based on the reference signal receiving power or the path loss.

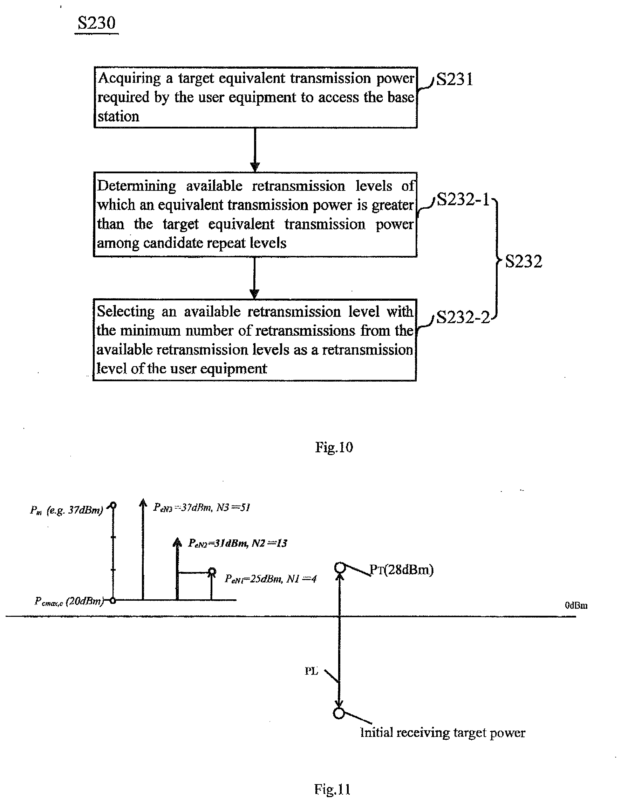

Alternatively, the user equipment may further acquire a target equivalent transmission power required by the user equipment to access the base station; and a retransmission level for the user equipment is selected according to the target equivalent transmission power, which will be described in conjunction with Figs. 10 and 11 below.

In S240, the initial access signal is retransmitted to the base station according to the selected retransmissions level to access the network. As an example, an actual transmission power of the user equipment may be determined based on the number of retransmissions corresponding to the selected retransmission level; and the initial access signal is repeatedly transmitted for the number of retransmissions corresponding to the selected retransmission level at the actual transmission power.

Assuming that a second candidate retransmission level is selected from three candidate retransmission levels, and the number of retransmissions corresponding to the second candidate retransmission level is N2, then the user equipment retransmits the initial access signal for N2 times to obtain a target equivalent transmission power required by the user equipment to access the base station so as to access the base station. Since the retransmission level selected in S230 is a retransmission level suitable for the specific conditions of the user equipment, the user equipment is enabled to transmit the initial access signal for an appropriate number of retransmissions and at an appropriate transmission power in S240, so as to increase a spectrum utilization efficiency and save the transmission power of the user equipment.

If the base station cannot be accessed by retransmitting the initial access signal according to the selected retransmission level due to factors such as external interference, etc., then in S240, the retransmission level may be increased, for example, the initial access signal is retransmitted to the base station according to the third candidate retransmission level. In each retransmission level, transmission may be performed fixedly at an actual transmission power corresponding to an equivalent transmission power thereof, or the retransmission level is increased if access cannot be accomplished. Or, in the selected retransmission level, an initial transmission power is set based on the equivalent transmission power of the retransmission level, and the actual transmission power thereof is increased when the base station cannot be accessed by utilizing the initial sending power, i.e. power rising is performed in the selected retransmission level, until the base station is accessed or the increased actual transmission power reaches the maximum actual transmission power of the user equipment. The retransmission level of the user equipment is increased then in the case where the actual transmission power reaches the maximum actual transmission power and the base station is not accessed. In the increased retransmission level, the aforementioned operations are repeated.

After the base station successfully receives the initial access signal from the user equipment, the base station performs signal synchronization and interacts with the user equipment in response to the initial access signal so as to allocate a wireless resource to the user equipment, so that the user equipment accesses the base station for communication. After having successfully received the initial access signal from the user equipment, the base station may use various existing or future methods to execute subsequent operations to implement access.

In the technical solutions of the access method according to the embodiments of the present disclosure, each candidate retransmission level of an initial access signal of a user equipment is set based on an initial receiving target power of a base station, and a retransmission level for the user equipment is selected from the candidate retransmission levels, which enables the user equipment to retransmit an initial access signal with an appropriate retransmission solution, so as to increase a spectrum utilization efficiency and save the transmission power of the user equipment.

An example of determining a maximum equivalent transmission power of the user equipment based on the initial receiving target power (S221) is given below in conjunction with Figs. 4-7.

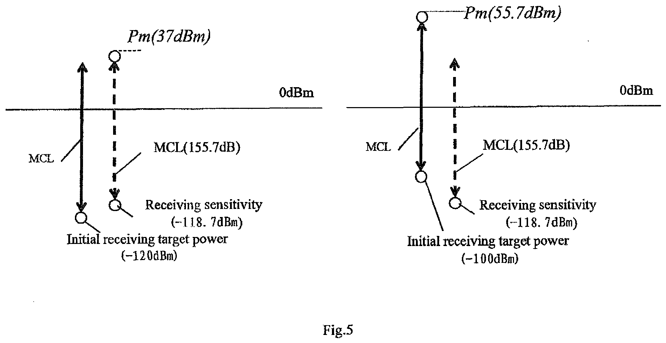

Fig. 4 is a flowchart which illustratively shows a first example of setting a maximum equivalent transmission power of a user equipment (S221) in setting candidate retransmission levels in Fig. 3. Fig. 5 is an implementation example which illustratively shows setting a maximum equivalent transmission power of Fig. 4.

As shown in Fig. 4, the setting a maximum equivalent transmission power of the user equipment based on the initial receiving target power (S221) may comprise: acquiring a minimum coupling loss (MCL) between the user equipment and the base station, and a receiving sensitivity of the base station (S410); determining a greater one of the initial receiving target power and the receiving sensitivity of the base station (S421); and setting a maximum equivalent transmission power of the user equipment based on the greater one and the minimum coupling loss (S422). By utilizing S421 and S422, a maximum equivalent transmission power of the user equipment is set based on the initial receiving target power, the minimum coupling loss and the receiving sensitivity of the base station (S420).

The minimum coupling loss (MCL) and the receiving sensitivity of the base station are fixed with regard to the eNB, which may be stored in the user equipment to be acquired when in use, or may be acquired by receiving a broadcast signal of the base station. In S421 and S422, a maximum equivalent transmission power Pm of the user equipment may be set according to the following Formula (1):

$$Pm = \max\{\text{initial receiving target power, receiving sensitivity}\} + MCL$$

$$\text{Formula (1)}$$

max {initial receiving target power, receiving sensitivity} in Formula (1) is used for implementing S421, that is, obtaining a greater one of the initial receiving target power and the receiving sensitivity, and the greater one plus the MCL to implement S422.

The initial receiving target powers of the base station may have offset with regard to different initial access signals, for example, an offset of DeltaPreamble is performed when the initial access signal is preamble. At this time, the initial receiving target power in Formula (1) is in fact the sum of the aforementioned initial receiving target power set by the base station and the offset DeltaPreamble. With regard to a pre-determined base station, the offset DeltaPreamble is constant.

In Fig. 5, it is assumed that the receiving sensitivity of the base station is -118.7 dBm, the MCL is 155.7 dB, and the offset DeltaPreamble is not taken into consideration for simplicity, and the horizontal line is a reference line of 0 dBm. In the left side diagram of Fig. 5, the initial receiving target power of the base station is -120 dBm, according to Formula (1) Pm = max{-120 dBm, -118.7 dBm} + 155.7 dB = 37 dBm. In the right side diagram of Fig. 5, the initial receiving target power of the base station is -100 dBm, according to Formula (1) Pm = max{-100 dBm, -118.7 dBm} + 155.7 dB = 55.7 dBm. It can be seen from Fig. 5 that when the initial receiving target power of the base station changes due to factors such as a communication environment, based on Formula (1), the maximum equivalent transmission power can be determined accurately, and the maximum equivalent transmission power enables the user equipment to access the base station at any position of the base station. The accurate determination of the maximum equivalent transmission power enables more reasonable setting of various candidate retransmission levels.

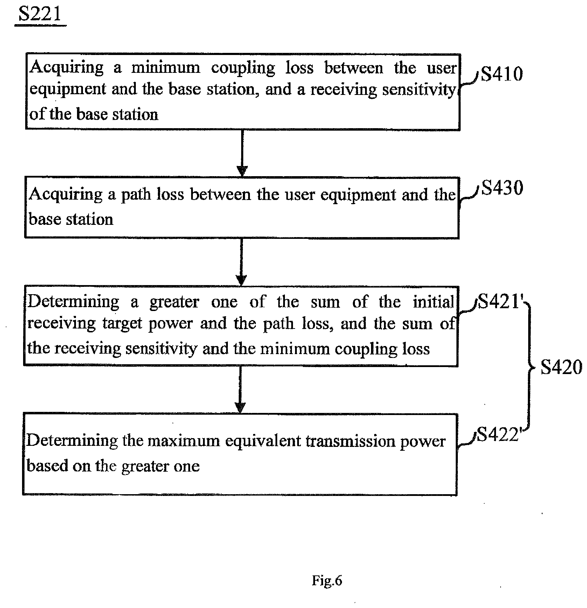

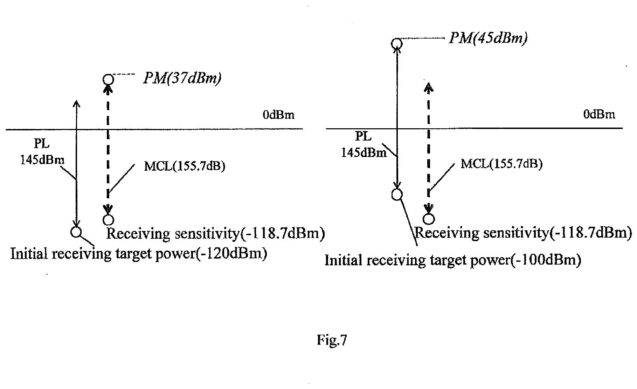

Fig. 6 is a flowchart which illustratively shows a second example of setting a maximum equivalent transmission power of a user equipment in setting candidate retransmission levels in Fig. 3. Fig. 7 is an implementation example which illustratively shows setting a maximum equivalent transmission power of Fig. 6.

In contrast to Fig. 4, in the second example of Fig. 6, a path loss between the user equipment and the base station is further acquired, and in S420, a maximum equivalent transmission power of the user equipment is set based on the initial receiving target power, the minimum coupling loss, the receiving sensitivity and the path loss.

As shown in Fig. 6, the setting a maximum equivalent transmission power of the user equipment based on the initial receiving target power (S221) may comprise: acquiring a minimum coupling loss (MCL) between the user equipment and the base station, and a receiving sensitivity of the base station (S410); acquiring a path loss between the user equipment and the base station (S430); determining a greater one of the sum of the initial receiving target power and the path loss, and the sum of the receiving sensitivity and the minimum coupling loss (S421'); and determining the maximum equivalent transmission power based on the greater one (S422'). By utilizing S421' and S422', a maximum equivalent transmission power of the user equipment is set based on the initial receiving target power, the minimum coupling loss and the receiving sensitivity of the base station (S420).

As described above, the minimum coupling loss (MCL) and the receiving sensitivity of the base station are fixed. The path loss acquired in S430 may be calculated by the user equipment based on a reference signal received from the base station. In addition, when a plurality of user equipments are adjacent in positions, the path loss may further be acquired from other user equipments of which the path losses have been calculated. The specific obtaining method of the path loss does not constitute a limitation to the embodiments of the present disclosure. In S421' and S422', a maximum equivalent transmission power Pm of the user equipment may be set according to the following Formula (2):

$$Pm = \max\{\text{initial receiving target power} + PL, \text{receiving sensitivity} + MCL\}$$

$$\text{Formula (2)}$$

In Formula (2), a greater one of the sum of the initial receiving target power and the path loss, and the sum of the receiving sensitivity and the minimum coupling loss is directly taken as the maximum equivalent transmission power Pm of the user equipment. Similarly, the initial receiving target power in Formula (2) may have an offset DeltaPreamble.

In Fig. 7, it is assumed that the receiving sensitivity of the base station is -118.7 dBm, the MCL is 155.7 dB, the offset DeltaPreamble is not taken into consideration for simplicity, the horizontal line is a reference line of 0 dBm, and the path loss (PL) is, e.g. 145 dB. As described above, the minimum coupling loss typically comprises a free space loss from the user equipment to an antenna of the base station, and an antenna feedback system loss between the antenna of the base station and a receiver thereof, and therefore the path loss (PL) is less than the minimum coupling loss (MCL).

In the left side diagram of Fig. 7, the initial receiving target power of the base station is -120 dBm, according to Formula (2) Pm = max{-120 dBm + 145 dB, -118.7 dBm + 155.7 dB} = 37 dBm. In the right side diagram of Fig. 7, the initial receiving target power of the base station is -100 dBm, according to Formula (2) Pm = max{-100 dBm + 145 dB, -118.7 dBm + 155.7 dB} = 45 dBm. It can be seen from Fig. 7 that when the initial receiving target power of the base station changes due to factors such as a communication environment, based on Formula (2), the maximum equivalent transmission power is able to be determined accurately, and the maximum equivalent transmission power enables the user equipment to access the base station at any position of the base station. The accurate determination of the maximum equivalent transmission power enables more reasonable setting of various candidate retransmission levels.

An example of setting a candidate retransmission level (S222) of the user equipment according to the maximum equivalent transmission power Pm is given below in conjunction with Fig. 8 to Fig. 9.

Fig. 8 is a flowchart which illustratively shows setting candidate retransmission levels according to a maximum equivalent transmission power of Fig. 3. Fig. 9 is an implementation example which illustratively shows setting candidate retransmission levels according to a maximum equivalent transmission power of Fig. 8.

As shown in Fig. 8, the setting candidate retransmission levels (S222)of the user equipment based on the maximum equivalent transmission power may comprise: setting an equivalent transmission power of each candidate retransmission level based on the maximum equivalent transmission power and a maximum actual transmission power of the user equipment (step 810); and setting the number of retransmissions of each candidate level based on the equivalent transmission power of each candidate retransmission level (step 820).

The maximum actual transmission power of the user equipment is generally fixed. With regard to a user equipment performing MTC, the maximum actual transmission power is, e.g. 20 dBm. With regard to a mobile phone, the maximum actual transmission power is, e.g. 17 dBm. The maximum equivalent transmission power typically corresponds to an equivalent transmission power of the highest candidate level. The retransmission of the initial access signal is equivalent to increasing a transmission power of the user equipment, so as to implement an equivalent transmission power greater than the maximum actual transmission power. Therefore, in S810, an equivalent transmission power of each candidate retransmission level may be set based on the maximum equivalent transmission power and the maximum actual transmission power. As shown in Fig. 8, S810 may comprise: equally dividing a range from the maximum actual transmission power to the maximum equivalent transmission power into intervals corresponding to the number of candidate retransmission levels (S811); and setting a transmission power numerical value greater than an upper limit of each interval as an equivalent transmission power of each candidate retransmission level (S812). As an example, S810 may be implemented according to the following Formula (3):

$$P_{eNx} = \text{round}((P_m - P_{cmax,c})/X) * x + P_{cmax,c} \qquad \text{Formula (3)},$$

wherein Pm is the maximum equivalent transmission power, $P_{cmax,c}$ is a maximum actual transmission power of the user equipment, X is the number of candidate retransmission levels, round() is a round up function, and $P_{eNx}$ is an equivalent transmission power of the xth candidate retransmission level.

In S820, the number of retransmissions Nx of each candidate level may be set based on the equivalent transmission power $P_{eNx}$ of each candidate retransmission level according to the following Formula (4):

$$Nx = round(10^{(P_{eNx} - P_{cmax,c})/10})$$               Formula (4),

wherein $P_{eNx}$ is an equivalent transmission power of an xth candidate retransmission level, $P_{cmax,c}$ is a maximum actual transmission power of the user equipment, round() is a round up function, and Nx is the number of retransmissions of the xth candidate retransmission level. In Formula (4), a rounding function may be utilized to replace the round up function.

In the implementation example of Fig. 9, it is assumed that the maximum equivalent transmission power Pm is 45 dBm, the maximum actual transmission power $P_{cmax,c}$ of the user equipment is 20 dBm, and the number X of the candidate retransmission levels is 3. By utilizing Formula (3), it can be calculated that an equivalent transmission power $P_{eN1}$ of a first candidate retransmission level is 29 dBm, an equivalent transmission power $P_{eN2}$ of a second candidate retransmission level is 37 dBm, and an equivalent transmission power $P_{eN3}$ of a third candidate retransmission level is 45 dBm. By utilizing Formula (4), it can be calculated that the number of retransmissions N1 of the first candidate retransmission level is 8, the number of retransmissions N2 of the second candidate retransmission level is 51, and the number of retransmissions N3 of the third candidate retransmission level is 317.

An example of selecting a retransmission level of the user equipment (S230) is given below in conjunction with Fig. 10 to Fig. 11. Fig. 10 is a flowchart which illustratively shows selecting a retransmission level of a user equipment from candidate retransmission levels in the access method of Fig. 2. Fig. 11 is an implementation example which illustratively shows selecting a retransmission level of a user equipment of Fig. 10.

As shown in Fig. 10, the selecting a retransmission level for the user equipment from the candidate retransmission levels may comprise: acquiring a target equivalent transmission power required by the user equipment to access the base station (S231); and selecting a retransmission level for the user equipment according to the target equivalent transmission power (S232). That is, the retransmission level is selected based on the target equivalent transmission power of the user equipment. The target equivalent transmission power of the user equipment may, for example, be equal to an initial receiving target power of the base station plus a path loss between the user equipment and the base station. In addition, where there is interference between the user equipment and the base station, the target equivalent transmission power of the user equipment should also increase a component corresponding to the interference.

In S232, the retransmission level for the user equipment may be selected as follows: determining available retransmission levels of which an equivalent transmission power is greater than the target equivalent transmission power among candidate retransmission level (S232-1); and selecting an available retransmission level with the minimum number of retransmissions from the available retransmission levels as a retransmission level of the user equipment (S232-2).

In S232, the retransmission level for the user equipment may be selected by utilizing the following Formula (5):

$$Ns = min\{Nx \mid P_{eNx} - P_T > 0\}$$               Formula (5),

wherein $P_T$ is a target equivalent transmission power required by the user equipment to access the base station, $P_{eNx}$ is an equivalent transmission power of each candidate retransmission level, and Nx is the number of retransmissions of an xth candidate retransmission level.

In the implementation example of selecting a retransmission level in Fig. 11, it is assumed that the maximum equivalent transmission power Pm is 37 dBm, the maximum actual transmission power $P_{cmax,c}$ of the user equipment is 20 dBm, the number of candidate retransmission levels X is 3, the equivalent transmission power $P_{eN1}$ of the first candidate retransmission level is 25 dBm and the number of retransmissions thereof N1 is 4, the equivalent transmission power $P_{eN2}$ of the second candidate retransmission level is 31 dBm and the number of retransmissions thereof N2 is 13, the equivalent transmission power $P_{eN3}$ of the third candidate retransmission level is 37 dBm and the number of retransmissions N3 is 51, and the target equivalent transmission power $P_T$ required by the user equipment to access the base station is 28 dBm. The target equivalent transmission power $P_T$ is 28 dBm, greater than the equivalent transmission power $P_{eN1}$ of the first candidate retransmission level which is 25 dBm, and less than the equivalent transmission power $P_{eN2}$ of the second candidate retransmission level which is 31 dBm. Therefore, the second candidate retransmission level and the third candidate retransmission level are both available retransmission levels of the user equipment; however, the number of retransmissions 13 of the second candidate retransmission level is less than the number of retransmissions 15 of the third candidate retransmission level, and the second candidate retransmission level is selected as a retransmission level of the user equipment.

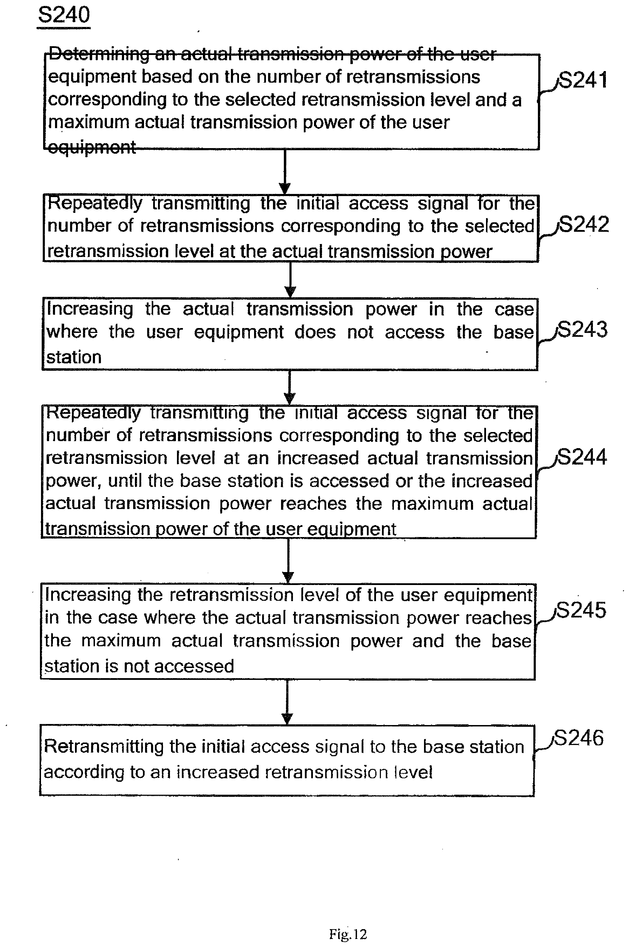

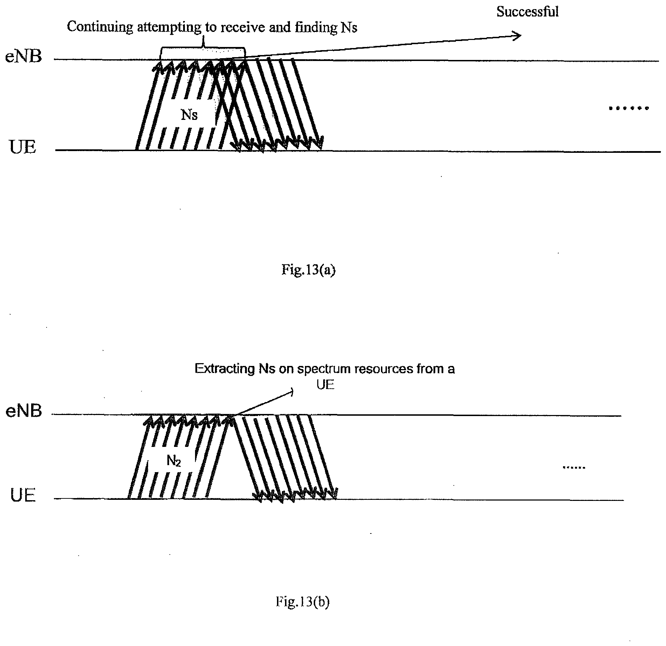

An example of retransmitting the initial access signal to the base station according to the selected retransmission level S240 is given below in conjunction with Fig. 12 and Fig. 13. Fig. 12 is a flowchart which illustratively shows retransmission of the initial access signal to the base station in the access method of Fig. 2.

As shown in Fig. 12, the retransmitting of the initial access signal to the base station according to the selected retransmission level may comprise: determining an actual transmission power of the user equipment based on the number of retransmissions corresponding to the selected retransmission level (S241); and repeatedly transmitting the initial access signal for the number of retransmissions corresponding to the selected retransmission level at the actual transmission power (S242).

In S241, the actual transmission power of the user equipment may be determined based on the target equivalent transmission power required by the user equipment to access the base station, or the actual transmission power of the user equipment may be determined based on the maximum actual transmission power of the user equipment. Accordingly, S241 may comprise: acquiring at least one of a target equivalent transmission power required by the user equipment to access the base station and a maximum actual transmission power of the user equipment; and determining an actual transmission power of the user equipment based on at least one of the target equivalent transmission power and the maximum actual transmission power.

In S241, the actual transmission power $P_{Trans}$ of the user equipment may be determined based on the target equivalent transmission power $P_T$ by utilizing the following Formula (6):

$$P_{Trans} = P_T - 10\log(Ns) \hspace{3cm} \text{Formula (6),}$$

wherein Ns is the number of retransmissions of a selected sth retransmission level. When the user equipment retransmits the initial access signal for Ns times at an actual transmission power $P_{Trans}$ obtained via Formula (6), it generates a target equivalent transmission power $P_T$, which is a transmission power required by the user equipment to access the base station. According to Formula (6), the actual transmission power of the user equipment may be accurately set, so as to be able to save power consumption of the user equipment. This is very advantageous where it is able to acquire the target equivalent transmission power $P_T$ conveniently. The target equivalent transmission power $P_T$ may be acquired by utilizing the aforementioned method, and for example, is equal to the sum of the initial receiving target power and the path loss.

In S241, the actual transmission power $P_{Trans}$ of the user equipment may be determined based on the maximum actual transmission power $P_{camx,c}$ by utilizing the following Formula (7):

$$P_{Trans} = Pcmax, c + 10\log(Ns - 1) - 10\log(Ns) \hspace{2cm} \text{Formula}$$

(7),

wherein Ns is the number of retransmissions of a selected sth retransmission level, and Ns-1 is the number of retransmissions of an (s-1)th retransmission level. When the user equipment retransmits the initial access signal for Ns times at an actual transmission power $P_{Trans}$ obtained via Formula (7), the equivalent transmission power generated thereby is Pcmax, c + 10log(Ns-1), i.e. the equivalent transmission power of the (s-1)th retransmission level, which is lower than the target equivalent transmission power $P_T$. In this way, the user equipment may possibly not be able to access the base station successfully, and needs to increase the actual transmission power or increase the number of retransmissions, which wastes wireless resources and power of the user equipment compared to Formula (6). However, the maximum actual transmission power is pre-determined and the implementation thereof is relatively simple.

Continuing to take Fig. 11 as an example, in the case where the second candidate retransmission level is selected, the initial access signal is retransmitted for 13 times at the actual transmission power $P_{Trans}$ obtained by utilizing Formula (6), then an equivalent transmission power of 28 dBm is generated, i.e. the target equivalent transmission power $P_T$; and the initial access signal is retransmitted for 13 times at the actual transmission power $P_{Trans}$ obtained by utilizing Formula (7), then an equivalent transmission power of 25 dBm is generated, i.e. the equivalent transmission power of the first candidate retransmission level.

As shown in Fig. 12, the retransmitting the initial access signal to the base station according to the selected retransmission level may further comprise steps S243 to S246, specifically, increasing the actual transmission power in the case where the user equipment does not access the base station (S243); repeatedly transmitting the initial access signal for the number of retransmissions corresponding to the selected retransmission level at an increased actual transmission power, until the base station is accessed or the increased actual transmission power reaches the maximum actual transmission power of the user equipment (S244); increasing the retransmission level of the user equipment in the case where the actual transmission power reaches the maximum actual transmission power and the base station is not accessed (S245); and retransmitting the initial access signal to the base station according to an increased retransmission level (S246).

When the initial access signal is retransmitted at the acquired actual transmission power $P_{Trans}$ while the base station is not accessed in S242, the actual transmission power is increased while the number of retransmissions is unchanged in S243 to access again. As an example, the increased actual transmission power P'$_{Trans}$ may be calculated by the following Formula (8):

$$\mathrm{P'}_{\mathrm{Trans}} = P_{trans} + \mathrm{PR\_step} \qquad \text{Formula (8),}$$

wherein P$_{Trans}$ is the actual transmission power of the user equipment, and PR_step is a power increase step length in a power rising process. The PR_step is typically set by the base station. The base station may, for example, notify the user equipment of PR_step via a broadcast signal.

The initial access signal is retransmitted for Ns times at the increased actual transmission power P'$_{Trans}$ in S244, and if the base station is accessed, then access is completed; and if the base station has not been accessed, then a new actual transmission power is set by continuing utilizing Formula (8), until the base station is accessed or the increased actual transmission power reaches the maximum actual transmission power P$_{cmax,c}$ of the user equipment.

In S245, if the actual transmission power reaches the maximum actual transmission power P$_{cmax,c}$ and the base station is not accessed, then the retransmission level of the user equipment is increased, i.e. executing the number of retransmissions of a higher retransmission level.

In S246, the initial access signal is retransmitted to the base station according to an increased retransmission level. In the increased retransmission level, the corresponding actual transmission power may be calculated by utilizing Formula (6) or Formula (7), and the initial access signal is retransmitted for the number of retransmissions corresponding to the increased retransmission level. In addition, S243 to S245 described above may also be possibly repeated.

In addition, the transmission power of the initial access signal and the total rising of the number of retransmissions may also be set in an access process. Every time the power of the initial access signal rises, the numerical value of the total rising decreases by one. Every time the retransmission level of the initial access signal rises, the numerical value of the total rising also further decreases by one. When the total rising is used up, then access is no longer executed. The total rising is typically set by the base station. The base station may, for example, notify the user equipment of the total rising via a broadcast signal. By utilizing the total rising, the access process is prevented from being excessively executed by the user equipment when the communication condition is relatively poor, thereby saving communication resources and terminal energy consumption.

After the base station successfully receives the initial access signal from the base station, the base station performs signal synchronization and interacts with the user equipment in response to the initial access signal so as to allocate a wireless resource to the user equipment, so that the user equipment accesses the base station for communication.

Fig. 13(a) illustratively shows a first operation example of a base station according to an embodiment of the present disclosure. As shown in Fig. 13(a), the user equipment repeatedly transmits the initial access signal for the number of retransmissions Ns in the selected retransmission level, and the base station such as an eNB continues receiving each initial access signal until the initial access signal is successfully recognized. Even if the initial access signal is successfully recognized, the base station still continues to attempt receiving the initial access signal, so as to determine the number of retransmissions Ns of the user equipment. Then, the base station interacts with the user equipment according to the number of retransmissions Ns to complete access. When the base station has not successfully recognized the initial access signal, the base station executes the next access process in cooperation with the user equipment. The wireless resource may be time.

Fig. 13(b) illustratively shows a second operation example of a base station according to an embodiment of the present disclosure. As shown in Fig. 13(b), the user equipment repeatedly transmits the initial access signal for the number of retransmissions Ns in the selected retransmission level, and at the same time the user equipment further maps information about the number of retransmissions Ns onto a wireless resource and transmits the wireless resource on which the number of retransmissions Ns is mapped to the base station. The base station extracts the number of retransmissions Ns from the wireless resource, and receives the initial access signal for Ns times. When the base station successfully recognizes the initial access signal, the base station interacts with the user equipment according to the number of retransmissions Ns to complete access. When the base station has not successfully recognized the initial access signal, the base station executes the next access process in cooperation with the user equipment.

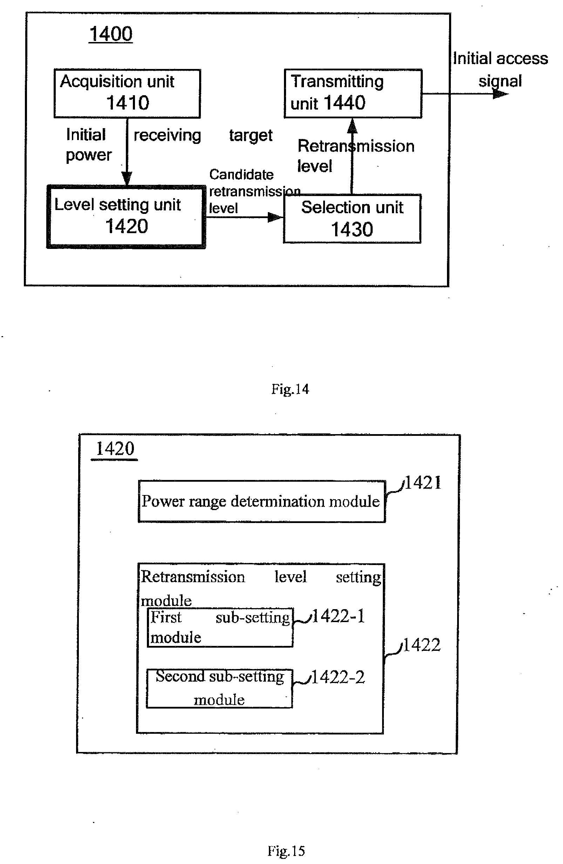

Fig. 14 is a block diagram which illustratively shows an access device 1400 according to an embodiment of the present disclosure. The access device 1400 is applied to each user equipment shown in Fig. 1.

As shown in Fig. 14, the access device 1400 may comprise: an acquisition unit 1410, configured to acquire an initial receiving target power of a base station to be accessed by the user equipment; a level setting unit 1420, configured to set candidate retransmission levels of an initial access signal of the user equipment based on the initial receiving target power; a selection unit 1430, configured to select a retransmission level for the user equipment from the candidate retransmission levels; and a transmitting unit 1440, configured to retransmit the initial access signal to the base station according to the selected retransmission level to access the network.

The acquisition unit 1410, for example, may acquire the initial receiving target power of the base station according to a broadcast signal of the base station to be accessed. Specifically, the user equipment may have a receiving device for receiving a signal from the base station, the receiving device processing the broadcast signal to obtain various parameters, comprising the initial receiving target power. Correspondingly, the acquisition unit 1410 may acquire the initial receiving target power from the receiving device. In addition to comprising the initial receiving target power of the base station, the broadcast signal may comprise other information, such as a receiver sensitivity of the base station, a minimum coupling loss (MCL) between the base station and the user equipment, etc. The minimum coupling loss typically comprises a free space loss from the user equipment to an antenna of the base station, and an antenna feedback system loss between the antenna of the base station and a receiver thereof.

The initial receiving target power is a power value required for accessing the base station and the initial access signal of the user equipment to arrive at the base station. The initial receiving target power is generally set by the base station. The initial receiving target power of each base station may be different, and the initial receiving target power of the same base station in different environments may be the same.

Alternatively, the acquisition unit 1410 may also acquire the initial receiving target power from a particular memory. For example, one server may be utilized to maintain initial receiving target powers of a plurality of base stations in real time, and provide the same to the user equipment when the user equipment requires. The way of acquiring the initial receiving target power of the base station used by the acquisition unit 1410 does not limit the embodiments of the present disclosure.

The level setting unit 1420 sets a plurality of candidate retransmission levels of the initial access signal of the user equipment for the user equipment based on the initial receiving target power. Typically, the number of the candidate retransmission levels set by the level setting unit 1420 may be 2, 3, 4, 5, etc., which may be appropriately determined according to the range of the cell and the diversity of communication environments in the cell. For example, when the range of the cell is relatively large, the level setting unit 1420 may set more candidate retransmission levels; when the range of the cell is relatively small, the level setting unit 1420 may set fewer candidate retransmission levels; when the communication environments in the cell are relatively complicated, the level setting unit 1420 may set more candidate retransmission levels; and when the communication environments in the cell are relatively simple, the level setting unit 1420 may set fewer candidate retransmission levels. Three candidate retransmission levels are taken as an example herein for description.

In each candidate retransmission level, there may be different numbers of retransmissions and different equivalent retransmission powers. For example, in an xth candidate retransmission level, the number of retransmissions is Nx, and the equivalent transmission power is $P_{eNx}$, where x = 1, 2, or 3. When there are more candidate retransmission levels, the value range of x increases accordingly. In each retransmission level, transmission may be performed fixedly at an actual transmission power corresponding to an equivalent transmission power thereof, or the actual transmission power may be changed.

Fig. 15 is a block diagram which illustratively shows a level setting unit in the access device of Fig. 14. As shown in Fig. 15, the level setting unit 1420 may comprise: a power range determination module 1421, configured to determine a maximum equivalent transmission power of the user equipment based on the initial receiving target power; and a retransmission level setting module 1422, configured to set candidate retransmission levels of the user equipment based on the maximum equivalent transmission power.

The maximum equivalent transmission power determined by the power range determination module 1421 enables the user equipment to access the base station at any position of the base station, that is, the initial access signal transmitted by the user equipment at any position of the cell utilizing the maximum equivalent transmission power can be recognized by the base station. As an example, the maximum equivalent transmission power may be the sum of the initial receiving target power and a maximum path loss in the cell of the base station. The maximum path loss, for example, is a path loss from the farthest position from the base station in the cell to the base station. In the case where there is an obstacle in the cell, the maximum path loss may be a path loss from a position with the greatest influence by the obstacle to the base station.

In addition, the power range determination module 1421 may further determine a maximum equivalent transmission power of the user equipment based on the initial receiving target power and other parameters. As an example, the acquisition unit 1410 may acquire a minimum coupling loss between the user equipment and the base station, and a receiving sensitivity of the base station, and the power range determination module 1421 sets a maximum equivalent transmission power of the user equipment based on the initial receiving target power, the minimum coupling loss and the receiving sensitivity of the base station.

The minimum coupling loss (MCL) and the receiving sensitivity of the base station are fixed with regard to an eNB. The acquisition unit 1410 may acquire the minimum coupling loss (MCL) and the receiving sensitivity from a dedicated server. Or, the acquisition unit 1410 may acquire those from a receiving device from the user equipment, and the receiving device, for example, extracts those from a broadcast signal of the base station. The power range determination module 1421 may determine a greater one of the initial receiving target power and the receiving sensitivity of the base station; and set a maximum equivalent transmission power of the user equipment based on the greater one and the minimum coupling loss. The specific operations may refer to the description above made in conjunction with Formula (1) and the example given in conjunction with Fig. 5.

Alternatively, the power range determination module 1421 may further determine the maximum equivalent transmission power based on the path loss between the user equipment and the base station. In addition, the acquisition unit 1410 further acquires a path loss between the user equipment and the base station, and the power range determination module 1421 determines a greater one of the sum of the initial receiving target power and the path loss, and the sum of the receiving sensitivity and the minimum coupling loss, and determines the maximum equivalent transmission power based on the greater one of the two.

As described above, the minimum coupling loss (MCL) and the receiving sensitivity of the base station are fixed. The path loss acquired by the acquisition unit 1410 may be calculated based on a reference signal received from the base station, the reference signal, for example, being received by the user equipment from the base station. In addition, when a plurality of user equipments are adjacent in positions, the acquisition unit 1410 may further acquire the path loss from other user equipments of which the path losses have been calculated. The specific obtaining method of the path loss does not constitute a limitation to the embodiments of the present disclosure. The power range determination module 1421 may set the maximum equivalent transmission power via Formula (2) above. The specific operations may refer to the description above made in conjunction with Formula (2) and the example given in conjunction with Fig. 7.

The retransmission level setting module 1422 may set the candidate retransmission levels of the user equipment as follows: setting a maximum number of retransmissions of the user equipment based on the maximum equivalent transmission power; setting the number of retransmissions for each candidate retransmission level based on the number division of candidate retransmission levels and the maximum number of retransmissions; and calculating each equivalent transmission power corresponding to each number of retransmissions.

Alternatively, the retransmission level setting module 1422 may further set an equivalent transmission power of each candidate retransmission level firstly based on the maximum equivalent transmission power, and then set the number of retransmissions of each candidate level based on the equivalent transmission power of each candidate retransmission level. As shown in Fig. 15, the retransmission level setting module 1422 may comprise: a first sub-setting module 1422-1, configured to set an equivalent transmission power of each candidate retransmission level based on the maximum equivalent transmission power and a maximum actual transmission power of the user equipment; and a second sub-setting module 1422-2, configured to set the number of retransmissions of each candidate level based on the equivalent transmission power of each candidate retransmission level.

The maximum actual transmission power of the user equipment is generally fixed. With regard to a user equipment performing MTC, the maximum actual transmission power is, e.g. 20 dBm. With regard to a mobile phone, the maximum actual transmission power is, e.g. 17 dBm. The maximum equivalent transmission power typically corresponds to an equivalent transmission power of the highest candidate level. The retransmission of the initial access signal is equivalent to increasing a transmission power of the user equipment, so as to implement an equivalent transmission power greater than the maximum actual transmission power. Therefore, the first sub-setting module 1422-1 may set an equivalent transmission power of each candidate retransmission level based on the maximum equivalent transmission power and the maximum actual transmission power. Specifically, the first sub-setting module 1422-1 may equally divide a range from the maximum actual transmission power to the maximum equivalent transmission power into intervals corresponding to the number of candidate retransmission levels, and set a transmission power numerical value greater than an upper limit of each interval as an equivalent transmission power of each candidate retransmission level. The first sub-setting module 1422-1 may set an equivalent transmission power of each candidate retransmission level by utilizing Formula (3) described previously. The specific operations may refer to the description above made in conjunction with Formula (3) and relevant examples in Fig. 9.

The second sub-setting module 1422-2 may set the number of retransmissions of each candidate level based on the equivalent transmission power of each candidate retransmission level. Specifically, the second sub-setting module 1422-2 may set an equivalent transmission power of each candidate retransmission level by utilizing Formula (4) described previously. The specific operations may refer to the description above made in conjunction with Formula (4) and relevant examples in Fig. 9.

After the level setting unit 1420 sets each candidate retransmission level, the selection unit 1430 selects a retransmissions level for the user equipment from the candidate retransmission levels according to requirements. The retransmission level selected by the selection unit 1430, for example, depends on the position of the user equipment in the cell, the path loss from the user equipment to the base station, etc.

As an example, the selection unit 1430 may roughly correspond each set candidate retransmission level to a different region in the cell, and then select a retransmission level for the user equipment according to the position of the user equipment in the cell. As another example, the acquisition unit 1410 may acquire the path loss between the user equipment and the base station. Then, the selection unit 1430 selects a retransmission level for the user equipment from the candidate retransmission levels based on the path loss.

Alternatively, the acquisition unit 1410 may further acquire a target equivalent transmission power required to access the base station, and the selection unit 1430 selects a retransmission level for the user equipment according to the target equivalent transmission power. The target equivalent transmission power may, for example, be equal to an initial receiving target power of the base station plus a path loss between the user equipment and the base station. In addition, where there is interference between the user equipment and the base station, the target equivalent transmission power should also increase a component corresponding to the interference. Specifically, the selection unit 1430 may determine available retransmission levels of which an equivalent transmission power is greater than the target equivalent transmission power among candidate retransmission levels, and select an available retransmission level with the minimum number of retransmissions from the available retransmission levels as a retransmission level of the user equipment. As an example, the selection unit 1430 may select the retransmission level for the user equipment by utilizing the following Formula (5) described previously. The specific operations of the selection unit 1430 may refer to the description above made in conjunction with Formula (5) and relevant examples in Fig. 11.

The transmitting unit 1440 retransmits the initial access signal to the base station according to the selected retransmission level to access the network. It is assumed that the selection unit 1430 selects a second candidate retransmission level from three candidate retransmission levels, and the number of retransmissions corresponding to the second candidate retransmission level is N2. The transmitting unit 1440 retransmits the initial access signal for N2 times to obtain a target equivalent transmission power required to access the base station, so as to access the base station. Since the retransmission level selected by the selection unit 1430 is a retransmission level suitable for the specific conditions of the usher equipment, the transmitting unit 1440 enables the user equipment to transmit the initial access signal for an appropriate number of retransmissions and at an appropriate transmission power, so as to increase a spectrum utilization efiiciency and save the transmission power of the user equipment.

If the base station cannot be accessed by retransmitting the initial access signal according to the selected retransmission level due to factors such as external interference, etc., then the transmitting unit 1440 may increase the retransmission level, for example, the initial access signal is retransmitted to the base station according to the third candidate retransmission level. In each retransmission level, the transmitting unit 1440 may fixedly perform transmission at an actual transmission power corresponding to an equivalent transmission power thereof, or increase the retransmission level if access cannot be accomplished. Or, in the selected retransmission level, the transmitting unit 1440 sets an initial transmission power based on the equivalent transmission power of the selected retransmission level, and increases the actual transmission power thereof when the base station cannot be accessed by utilizing the initial transmission power. That is, the transmitting unit 1440 executes power rising in the selected retransmission level, until the base station is accessed or the increased actual transmission power reaches the maximum actual transmission power of the user equipment. The retransmission level of the user equipment is increased then in the case where the actual transmission power reaches the maximum actual transmission power and the base station is not accessed. In the increased retransmission level, the aforementioned operations are repeated.

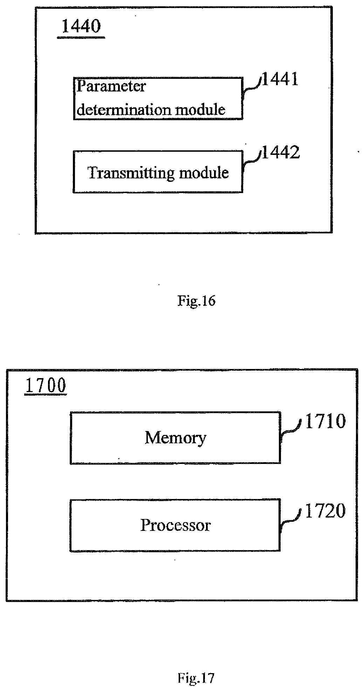

Fig. 16 is a block diagram which illustratively shows a transmitting unit in the access device of Fig. 14. As shown in Fig. 16, the transmitting unit 1440 may comprise: a parameter determination module 1441, configured to determine an actual transmission power of the user equipment based on the number of retransmissions corresponding to the selected retransmission level; and a transmitting module 1442, configured to repeatedly transmit the initial access signal for the number of retransmissions corresponding to the selected retransmission level at the actual transmission power.

The parameter determination module 1441 may appropriately determine an actual transmission power of the user equipment according to requirements. For example, the acquisition unit 1410 may further acquire at least one of a target equivalent transmission power required by the user equipment to access the base station and a maximum actual transmission power of the user equipment. The parameter determination module 1441 determines an actual transmission power of the user equipment based on at least one of the target equivalent transmission power and the maximum actual transmission power and the number of retransmissions.

The parameter determination module 1441 may determine an actual transmission power of the user equipment based on the target equivalent transmission power $P_T$ and the number of retransmissions of the selected retransmission level by utilizing Formula (6) described previously. The operations specifically executed by the parameter determination module 1441 may refer to the description made in conjunction with Formula (6).

Or, the parameter determination module 1441 may determine an actual transmission power of the user equipment based on the maximum actual transmission power and the number of retransmissions of the selected retransmission level by utilizing Formula (7) described previously. The operations specifically executed by the parameter determination module 1441 may refer to the description made in conjunction with Formula (7).

If the transmitting module 1442 retransmits the initial access signal at the actual transmission power but the base station is not accessed, the parameter determination module 1441 increases the actual transmission power while the number of retransmissions is unchanged, so as to access again. The parameter determination module 1441, for example, may increase the actual transmission power according to Formula (8) described previously, and may refer to the description in conjunction with Formula (8).

The transmitting module 1442 retransmits the initial access signal at the increased actual transmission power. If the base station is accessed, then access is completed. If the base station has not been accessed, then a new actual transmission power is set by continuing utilizing Formula (8), until the base station is accessed or the increased actual transmission power reaches the maximum actual transmission power of the user equipment.

In the cast that the transmitting module 1442 retransmits the initial access signal at the maximum actual transmission power but the base station is not accessed, the parameter determination module 1441 increases the retransmission level, i.e. executing the number of retransmissions of a higher retransmission level.

The transmitting module 1442 retransmits the initial access signal to the base station according to an increased retransmission level. In the increased retransmission level, the corresponding actual transmission power may be calculated by utilizing Formula (6) or Formula (7), and the initial access signal is retransmitted for the number of retransmissions corresponding to the increased retransmission level.

Therefore, the parameter determination module 1441 increases the actual transmission power when the user equipment has not accessed the base station, and increases the retransmission level of the user equipment in the case where the actual transmission power increases to the maximum actual transmission power and the base station is not accessed; and the transmitting module repeatedly transmits the initial access signal according to the increased actual transmission power or the number of retransmissions corresponding to an increased retransmission level to access the base station.

In addition, the transmission power of the initial access signal and the total rising of the number of retransmissions may also be set in an access process. Every time the power of the initial access signal rises, the numerical value of the total rising decreases by one. Every time the retransmission level of the initial access signal rises, the numerical value of the total rising also further decreases by one. When the total rising is used up, then access is no longer executed. The total rising is typically set by the base station. The base station may, for example, notify the user equipment of the total rising via a broadcast signal. By utilizing the total rising, the access process is prevented from being excessively executed by the user equipment when the communication condition is relatively poor, thereby saving communication resources and terminal energy consumption.

After the base station successfully receives the initial access signal from the base station, the base station performs signal synchronization and interacts with the user equipment in response to the initial access signal so as to allocate a wireless resource to the user equipment, so that the user equipment accesses the base station for communication. After having successfully received the initial access signal from the user equipment, the base station may use various existing or future methods to execute subsequent operations to implement access. The operations with regard to the base station may further refer to the description above in conjunction with Fig. 13.

In the technical solutions of the access device according to the embodiments of the present disclosure, each candidate retransmission level of an initial access signal of a user equipment is set based on an initial receiving target power of a base station, and a retransmission level for the user equipment is selected from the candidate retransmission levels, which enables the user equipment to retransmit an initial access signal with an appropriate retransmission solution, so as to increase a spectrum utilization efficiency and save the transmission power of the user equipment.

Fig. 17 is a block diagram which illustratively shows another access device 1700 according to an embodiment of the present disclosure.

As shown in Fig. 17, the another access device 1700 comprises: a memory 1710, configured to store a program code; and a processor 1720, configured to execute the program code to implement the access method described in conjunction with Figs. 2-12.

The memory 1710 may comprise at least one of a read-only memory and a random access memory, and provide an instruction and data for the processor 1720. A part of the memory 1710 may further comprise a non-volatile random access memory (NVRAM).

The processor 1720 may be a general-purpose processor, a digital signal processor (DSP), an application-specific integrated circuit (ASIC), a field programmable gate array (FPGA) or other programmable logical devices, a separate gate or transistor logical device, a separate hardware component. The general-purpose processor may be a microprocessor or any conventional processor, etc.

The steps of the method disclosed in conjunction with the embodiments of the present invention may directly be embodied as to be executed and completed by the processor, or be executed and completed by a combination of hardware and software modules in the processor. The software module may be located in a random memory, a flash memory, a read-only memory, a programmable read-only memory or an electrically erasable programmable memory, a register and other well-known storage mediums in the art. The storage medium is located in the memory 1710, and the processor 1720 reads information in the memory 1710 and completes the steps of the above method in combination with hardware thereof.

After the above access device 1400 and access device 1700 are disclosed, the user equipment comprising either of the access devices also falls within the scope of disclosure of the embodiments of the present disclosure.

Those of ordinary skill in the art may be aware that the units and algorithm steps of each example described in conjunction with the embodiments disclosed herein are able to be implemented by electronic hardware or a combination of computer software and electronic hardware. Whether to execute these functions by way of hardware or software depends on particular applications and design constraint conditions of the technical solutions. Those skilled artisans may use different methods to implement the described functions for each particular application, but such implementations should not be considered beyond the scope of the present invention.

It may be clearly understood by those skilled in the art that, for the purpose of convenient and brief description, the detailed working processes of the device and units described above may refer to the corresponding processes in the foregoing method embodiments, and the details will not be described herein again.

In the several embodiments provided in the present application, it should be understood that, the disclosed device and method may be implemented in other manners. For example, the device embodiments described above are merely exemplary. For example, the division of the units is merely logical function division and there may be other divisions in actual implementation. For example, a plurality of units or components may be combined or may be integrated into another apparatus, or some features may be ignored or not executed.

The units described as separate parts may be or may not be physically separate, and parts displayed as units may be or may not be physical units. Some or all of the units may be selected upon actual demands to implement the objective of the solution of the embodiments.

In the case that the functions arc implemented in the form of software functional units and sold or used as an independent product, the functions may be stored in a computer readable storage medium. Based on such understanding, the essence of the technical solutions of the present invention, or the portion of the invention that makes contribution to the state of the art, or portions of the technical solutions, can be embodied in the form of a software product that is stored in a storage medium and contains several instructions enabling a computer device (which can be a personal computer, a server, a network device, and so on) to execute all or some steps of the methods of the various embodiments of the present invention. The aforementioned storage medium comprises: various mediums that can store program codes, such as a USB flash drive, a removable hard disk, a read-only memory, a random access memory, a magnetic disk, or an optical disc, etc.

The above description is merely specific implementations of the present invention; however, the scope of protection of the present invention is not limited thereto and changes or substitutions which would be readily conceivable by those skilled in the art under the technical scope disclosed herein and fall within the technical scope disclosed by the present invention should all be covered within the scope of protection of the present invention. Therefore, the scope of protection of the present invention shall be limited by the scope of protection of the appended claims.

The present application claims the priority of Chinese patent application No. 201510246239.1 filed on 14 May 2015, the content of which is incorporated herein as a whole as a portion of the present application.

**Claims**

1.    An access method, applied to a user equipment, the access method comprising:

acquiring an initial receiving target power of a base station to be accessed by the user equipment;
setting candidate retransmission levels of an initial access signal of the user equipment based on the initial receiving target power;
selecting a retransmission level for the user equipment from the candidate retransmission levels; and
retransmitting the initial access signal to the base station according to the selected retransmission level to access a network.

2.    The access method according to claim 1, wherein the setting candidate retransmission levels of an initial access signal of the user equipment based on the initial receiving target power comprises:

determining a maximum equivalent transmission power of the user equipment based on the initial receiving target power; and
setting candidate retransmission levels of the user equipment based on the maximum equivalent transmission power.

3.    The access method according to claim 2, wherein the setting a maximum equivalent transmission power of the user equipment based on the initial receiving target power comprises:

acquiring a minimum coupling loss between the user equipment and the base station, and a receiving sensitivity of the base station; and
setting a maximum equivalent transmission power of the user equipment based on the initial receiving target power, the minimum coupling loss and the receiving sensitivity of the base station.

4. The access method according to claim 3, wherein the setting a maximum equivalent transmission power of the user equipment based on the initial receiving target power, the minimum coupling loss and the receiving sensitivity of the base station comprises:

determining a greater one of the initial receiving target power and the receiving sensitivity of the base station; and
setting a maximum equivalent transmission power of the user equipment based on the greater one and the minimum coupling loss.

5. The access method according to claim 3, wherein
the setting a maximum equivalent transmission power of the user equipment based on the initial receiving target power further comprises acquiring a path loss between the user equipment and the base station, and
the setting a maximum equivalent transmission power of the user equipment based on the initial receiving target power, the minimum coupling loss and the receiving sensitivity of the base station comprises:

determining a greater one of the sum of the initial receiving target power and the path loss, and the sum of the receiving sensitivity and the minimum coupling loss; and
determining the maximum equivalent transmission power based on the greater one.

6. The access method according to claim 2, wherein the setting candidate retransmission levels of the user equipment based on the maximum equivalent transmission power comprises:

setting an equivalent transmission power of each candidate retransmission level based on the maximum equivalent transmission power and a maximum actual transmission power of the user equipment; and
setting the number of retransmissions of each candidate level based on the equivalent transmission power of each candidate retransmission level.

7. The access method according to claim 6, wherein the setting an equivalent transmission power of each candidate retransmission level based on the maximum equivalent transmission power and a maximum actual transmission power of the user equipment comprises:

equally dividing a range from the maximum actual transmission power to the maximum equivalent transmission power into intervals corresponding to the number of candidate retransmission levels; and
setting a transmission power numerical value greater than an upper limit of each interval as an equivalent transmission power of each candidate retransmission level.

8. The access method according to claim 6, wherein the setting the number of retransmissions of each candidate level based on the equivalent transmission power of each candidate retransmission level comprises setting the number of retransmissions of each candidate retransmission level according to the following formula:

$$Nx = round(10^{(P_{eNx} - P_{cmax,c})/10})$$

wherein $P_{eNx}$ is an equivalent transmission power of an xth candidate retransmission level, $P_{cmax,c}$ is a maximum actual transmission power of the user equipment, round() is a round up function, and Nx is the number of retransmissions of the xth candidate retransmission level.

9. The access method according to claim 1, wherein the selecting a retransmission level for the user equipment from the candidate retransmission levels comprises:

acquiring a target equivalent transmission power required by the user equipment to access the base station; and
selecting a retransmission level for the user equipment according to the target equivalent transmission power.

10. The access method according to claim 9, wherein the selecting a retransmission level for the user equipment according to the target equivalent transmission power comprises:

determining available retransmission levels of which an equivalent transmission power is greater than the target equivalent transmission power among candidate retransmission levels; and
selecting an available retransmission level with the minimum number of retransmissions from the available retransmission levels as a retransmission level of the user equipment.

11. The access method according to claim 1, wherein the retransmitting the initial access signal to the base station according to the selected retransmission level comprises:

determining an actual transmission power of the user equipment based on the number of retransmissions corresponding to the selected retransmission level; and
repeatedly transmitting the initial access signal for the number of retransmissions corresponding to the selected retransmission level at the actual transmission power.

12. The access method according to claim 11, wherein the determining an actual transmission power of the user equipment based on the number of retransmissions corresponding to the selected retransmission level comprises:

acquiring at least one of a target equivalent transmission power required by the user equipment to access the base station and a maximum actual transmission power of the user equipment; and
determining an actual transmission power of the user equipment based on at least one of the target equivalent transmission power and the maximum actual transmission power.

13. The access method according to claim 11, wherein the retransmitting the initial access signal to the base station according to the selected retransmission level further comprises:

increasing the actual transmission power in the case where the user equipment does not access the base station:

repeatedly transmitting the initial access signal for the number of retransmissions corresponding to the selected retransmission level at an increased actual transmission power, until the base station is accessed or the increased actual transmission power reaches the maximum actual transmission power of the user equipment;
increasing the retransmission level of the user equipment in the case where the actual transmission power reaches the maximum actual transmission power and the base station is not accessed; and
retransmitting the initial access signal to the base station according to an increased retransmission level.

14. An access device, applied to a user equipment, the access device comprising:

an acquisition unit, configured to acquire an initial receiving target power of a base station to be accessed by the user equipment;
a level setting unit, configured to set candidate retransmission levels of an initial access signal of the user equipment based on the initial receiving target power;
a selection unit, configured to select a retransmission level for the user equipment from the candidate retransmission levels; and
a transmitting unit, configured to retransmit the initial access signal to the base station according to the selected retransmission level to access a network.

15. The access device according to claim 14, wherein the level setting unit comprises:

a power range determination module, configured to determine a maximum equivalent transmission power of the user equipment based on the initial receiving target power; and
a retransmission level setting module, configured to set candidate retransmission levels of the user equipment based on the maximum equivalent transmission power.

16. The access device according to claim 15, wherein
the acquisition unit acquires a minimum coupling loss between the user equipment and the base station, and a receiving sensitivity of the base station; and
the power range determination module sets a maximum equivalent transmission power of the user equipment based on the initial receiving target power, the minimum coupling loss and the receiving sensitivity of the base station.

17. The access device according to claim 16, wherein the power range determination module sets a maximum equivalent transmission power of the user equipment by the following operations:

determining a greater one of the initial receiving target power and the receiving sensitivity of the base station; and setting a maximum equivalent transmission power of the user equipment based on the greater one and the minimum coupling loss.

18. The access device according to claim 16, wherein
the acquisition unit further acquires a path loss between the user equipment and the base station, and
the power range determination module determines a greater one of the sum of the initial receiving target power and the path loss, and the sum of the receiving sensitivity and the minimum coupling loss, and determines the maximum equivalent transmission power based on the greater one.

19. The access device according to claim 15, wherein the retransmission level setting module comprises:

a first sub-setting module, configured to set an equivalent transmission power of each candidate retransmission level based on the maximum equivalent transmission power and a maximum actual transmission power of the user equipment; and
a second sub-setting module, configured to set the number of retransmissions of each candidate level based on the equivalent transmission power of each candidate retransmission level.

20. The access device according to claim 19, wherein the first sub-setting module equally divides a range from the maximum actual transmission power to the maximum equivalent transmission power into intervals corresponding to the number of candidate retransmission levels, and sets a transmission power numerical value greater than an upper limit of each interval as an equivalent transmission power of each candidate retransmission level.

21. The access device according to claim 19, wherein the second sub-setting module sets the number of retransmissions of each candidate retransmission level according to the following formula:

$$ \mathrm{Nx} = \mathrm{round}(10^{(P_{eNx} - P_{cmax,c})/10}) $$

wherein $P_{eNx}$ is an equivalent transmission power of an xth candidate retransmission level, $P_{cmax,c}$ is a maximum actual transmission power of the user equipment, round() is a round up function, and Nx is the number of retransmissions of the xth candidate retransmission level.

22. The access device according to claim 14, wherein
the acquisition unit acquires a target equivalent transmission power required by the user equipment to access the base station; and
the selection unit selects a retransmission level for the user equipment according to the target equivalent transmission power.

23. The access device according to claim 22, wherein the selection unit determines available retransmission levels of which an equivalent transmission power is greater than the target equivalent transmission power among candidate retransmissions levels, selects an available retransmission level with the minimum number of repeats from the available retransmission levels as a retransmission level of the user equipment.

24. The access device according to claim 14, wherein the transmitting unit comprises:

a parameter determination module, configured to determine an actual transmission power of the user equipment based on the number of retransmissions corresponding to the selected retransmission level; and
a transmitting module, configured to repeatedly transmit the initial access signal for the number of retransmissions corresponding to the selected retransmission level at the actual transmission power.

25. The access device according to claim 24, wherein

the acquisition unit further acquires at least one of a target equivalent transmission power required by the user equipment to access the base station and a maximum actual transmission power of the user equipment; and

the parameter determination module determines an actual transmission power of the user equipment based on at least one of the target equivalent transmission power and the maximum actual transmission power and the number of retransmissions.

26. The access device according to claim 24, wherein

the parameter determination module increases the actual transmission power in the case where the user equipment does not access the base station, and increases the retransmission level of the user equipment in the case where the actual transmission power increases to the maximum actual transmission power and the base station is not accessed; and

the transmitting module repeatedly transmits the initial access signal according to the increased actual transmission power or the number of retransmissions corresponding to an increased retransmission level to access the base station.

27. A user equipment, comprising the access device as claimed in any one of claims 14 to 26.

Base station

N2 =8    N1 = 4    N3 = 10

Second user equipment    First user equipment    Third user equipment
(cell middle)    (cell central)    (cell edge)

Fig.1

200

| |
|---|
| Acquiring an initial receiving target power of a base station to be accessed by the user equipment |

S210

| |
|---|
| Setting candidate retransmission levels of an initial access signal of the user equipment based on the initial receiving target power |

S220

| |
|---|
| Selecting a retransmission level for the user equipment from the candidate retransmission levels |

S230

| |
|---|
| Retransmitting the initial access signal to the base station according to the selected retransmission level to access a network |

S240

Fig.2

S220

Determining a maximum equivalent transmission power of the user equipment based on the initial receiving target power — S221

Setting candidate retransmission levels of the user equipment based on the maximum equivalent transmission power — S222

Fig.3

S221

Acquiring a minimum coupling loss between the user equipment and the base station, and a receiving sensitivity of the base station — S410

Determining a greater one of the initial receiving target power and the receiving sensitivity of the base station — S421

Setting a maximum equivalent transmission power of the user equipment based on the greater one and the minimum coupling loss — S422

S420

Fig.4

*Pm(37dBm)*

*Pm(55.7dBm)*

0dBm

0dBm

MCL

MCL(155.7dB)

MCL

MCL(155.7dB)

Receiving sensitivity
(-118. 7dBm)

Receiving sensitivity
(-118. 7dBm)

Initial receiving target power
(-120dBm)

Initial receiving target power
(-100dBm)

Fig.5

S221

| Acquiring a minimum coupling loss between the user equipment and the base station, and a receiving sensitivity of the base station | S410 |

| Acquiring a path loss between the user equipment and the base station | S430 |

| Determining a greater one of the sum of the initial receiving target power and the path loss, and the sum of the receiving sensitivity and the minimum coupling loss | S421' |

| Determining the maximum equivalent transmission power based on the greater one | S422' |

S420

Fig.6

PM(37dBm)

0dBm

PL
145dBm

MCL(155.7dB)

Receiving sensitivity(-118.7dBm)
Initial receiving target power(-120dBm)

PM(45dBm)

0dBm

PL
145dBm

MCL(155.7dB)

Receiving sensitivity(-118.7dBm)

Initial receiving target power(-100dBm)

Fig.7

S222

Equally dividing a range from the maximum actual transmission power to the maximum equivalent transmission power into intervals corresponding to the number of candidate retransmission levels /S811

Setting a transmission power numerical value greater than an upper limit of each interval as an equivalent transmission power of each candidate retransmission level /S812

S810

Setting the number of retransmissions of each candidate level based on the equivalent transmission power of each candidate retransmission level /S820

Fig.8

Pm(45dBm)

$P_{eN3}=45dBm,\ N3=317$

$P_{eN2}=37dBm,\ N2=51$

$P_{eNl}=29dBm,\ Nl=8$

$P_{cmax,c}\ (20dBm)$

Fig.9

S230

| Acquiring a target equivalent transmission power required by the user equipment to access the base station | ⌐S231 |

↓

| Determining available retransmission levels of which an equivalent transmission power is greater than the target equivalent transmission power among candidate repeat levels | ⌐S232-1 |

↓

| Selecting an available retransmission level with the minimum number of retransmissions from the available retransmission levels as a retransmission level of the user equipment | ⌐S232-2 |

}S232

Fig.10

$P_m$ (e.g. 37dBm)

$P_{eN3} = 37dBm$, $N3 = 51$

$P_{eN2} = 31dBm$, $N2 = 13$

$P_{eN1} = 25dBm$, $N1 = 4$

$P_T$(28dBm)

$P_{cmax,c}$ (20dBm)

0dBm

PL

Initial receiving target power

Fig.11

## S240

Determining an actual transmission power of the user equipment based on the number of retransmissions corresponding to the selected retransmission level and a maximum actual transmission power of the user equipment ⟋S241

↓

Repeatedly transmitting the initial access signal for the number of retransmissions corresponding to the selected retransmission level at the actual transmission power ⟋S242

↓

Increasing the actual transmission power in the case where the user equipment does not access the base station ⟋S243

↓

Repeatedly transmitting the initial access signal for the number of retransmissions corresponding to the selected retransmission level at an increased actual transmission power, until the base station is accessed or the increased actual transmission power reaches the maximum actual transmission power of the user equipment ⟋S244

↓

Increasing the retransmission level of the user equipment in the case where the actual transmission power reaches the maximum actual transmission power and the base station is not accessed ⟋S245

↓

Retransmitting the initial access signal to the base station according to an increased retransmission level ⟋S246

Fig.12

Successful

Continuing attempting to receive and finding Ns

eNB

Ns

UE

······

Fig.13(a)

Extracting Ns on spectrum resources from a
UE

eNB

$N_2$

UE

······

Fig.13(b)

<u>1400</u>

Acquisition unit
1410

Transmitting
unit 1440

Initial access
signal

Initial
power

receiving

target

Retransmission
level

Candidate
retransmission
level

Level setting unit
1420

Selection unit
1430

Fig.14

<u>1420</u>

Power range determination module — 1421

Retransmission    level    setting
module

First    sub-setting — 1422-1
module

Second sub-setting — 1422-2
module

1422

Fig.15

1440

Parameter
determination module　　1441

Transmitting module　　1442

Fig.16

1700

Memory　　1710

Processor　　1720

Fig.17

# INTERNATIONAL SEARCH REPORT

International application No.

**PCT/CN2016/082091**

### A. CLASSIFICATION OF SUBJECT MATTER

H04W 48/16 (2009.01) i

According to International Patent Classification (IPC) or to both national classification and IPC

### B. FIELDS SEARCHED

Minimum documentation searched (classification system followed by classification symbols)

H04W;H04Q

Documentation searched other than minimum documentation to the extent that such documents are included in the fields searched

Electronic data base consulted during the international search (name of data base and, where practicable, search terms used)

CNKI, CNPAT, WPI, EPODOC, 3GPP, GOOGLE: access, receive, retransmission, initial received target power, received, initial, power, repeat+, target, repetition, initial received target power, level, times

### C. DOCUMENTS CONSIDERED TO BE RELEVANT

| Category* | Citation of document, with indication, where appropriate, of the relevant passages | Relevant to claim No. |
|---|---|---|
| X | WO 2015021605 A1 (HUAWEI TECHNOLOGIES CO., LTD.), 19 February 2015 (19.02.2015), description, page 12, paragraph 7 to page 19, paragraph 5 | 1-27 |
| A | WO 2015063590 A1 (ALCATEL LUCENT), 07 May 2015 (07.05.2015), the whole document | 1-27 |
| A | WO 2014055878 A1 (INTERDIGITAL PATENT HOLDINGS, INC.), 10 April 2014 (10.04.2014), the whole document | 1-27 |
| A | CN 103002554 A (CHINA MOBILE GROUP SHANXI CO., LTD.), 27 March 2013 (27.03.2013), the whole document | 1-27 |
| A | US 2010074130 A1 (BERTRAND, P. et al.), 25 March 2010 (25.03.2010), the whole document | 1-27 |

☐ Further documents are listed in the continuation of Box C.          ☒ See patent family annex.

| | |
|---|---|
| *  Special categories of cited documents: | "T"  later document published after the international filing date or priority date and not in conflict with the application but cited to understand the principle or theory underlying the invention |
| "A"  document defining the general state of the art which is not considered to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
|---|---|
| 13 July 2016 (13.07.2016) | **26 July 2016 (26.07.2016)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer  **WANG, Xia**  Telephone No.: (86-10) **62413245** |

Form PCT/ISA/210 (second sheet) (July 2009)

## INTERNATIONAL SEARCH REPORT
Information on patent family members

International application No.

**PCT/CN2016/082091**

| Patent Documents referred in the Report | Publication Date | Patent Family | Publication Date |
|---|---|---|---|
| WO 2015021605 A1 | 19 February 2015 | CN 104541554 A | 22 April 2015 |
| | | EP 3021621 A1 | 18 May 2016 |
| WO 2015063590 A1 | 07 May 2015 | US 2015117233 A1 | 30 April 2015 |
| WO 2014055878 A1 | 10 April 2014 | KR 20150064196 A | 10 June 2015 |
| | | CN 104704884 A | 10 June 2015 |
| | | EP 2904850 A1 | 12 August 2015 |
| | | TW 201429174 A | 16 July 2014 |
| | | JP 2015537422 A | 24 December 2015 |
| | | US 2014098761 A1 | 10 April 2014 |
| | | HK 1213415 A1 | 30 June 2016 |
| CN 103002554 A | 27 March 2013 | None | |
| US 2010074130 A1 | 25 March 2010 | US 2014369297 A1 | 18 December 2014 |
| | | US 2012163231 A1 | 28 June 2012 |

Form PCT/ISA/210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201510246239